# EUROPÄISCHE PATENTSCHRIFT

(11) **EP 2 728 210 B1**
(45) Veröffentlichungstag und Bekanntmachung des Hinweises auf die Patenterteilung: **30.01.2019**
(21) Anmeldenummer: 14153016.2
(22) Anmeldetag: 07.07.2011
(51) Int. Cl.: F16B 37/08

(54) **Kombination eines Bolzenteils mit einer Mutter**
Combination of a bolt part with a nut
Combinaison d'une pièce de boulon et d'un écrou

(30) Priorität: 19.07.2010 DE 102010036482
(43) Veröffentlichungstag der Anmeldung: 07.05.2014
(62) Teilanmeldung aus: 11732416.0
(73) Patentinhaber: Gustav Klauke GmbH, 42855 Remscheid (DE)
(72) Erfinder: Frenken, Egbert, 52525 Heinsberg (DE)
(74) Vertreter: Müller, Enno

(56) Entgegenhaltungen:
- EP-A1- 0 273 863
- EP-A1- 0 441 751
- DE-T2- 69 214 640
- GB-A- 692 041
- US-A- 4 781 507

## Beschreibung

Die Erfindung betrifft eine Kombination eines eine Querschnittsfläche aufweisenden Bolzens mit einer Mutter, wobei die Mutter ein erster Teil aufweist, mit einer ersten Öffnung und einer Innenprofilierung, und ein zweites Teil mit einer zweiten Öffnung, wobei die Teile um eine Drehachse der Mutter zueinander zwischen einer Lösestellung und einer Verdrehstellung drehbar verbunden sind und die Öffnungen in Überdeckung sind und wobei darüber hinaus über die Länge des Bolzens die Querschnittsfläche des Bolzens zumindest teileweise eine Kontur aufweist, die mit der Öffnungskontur der zweiten Öffnung derart übereinstimmt, dass der Bolzen in die zweite Öffnung einführbar ist aber nicht darin drehbar ist.

Eine hierzu geeignete Mutter ist beispielsweise aus der US 2009/0226281A1 bekannt. Bei der bekannten Mutter sind in dem ersten Teil über einen Teil des Umfangs sich erstreckende Gewinde-Teilstücke aufgenommen, wobei die Gewinde-Teilstücke relativ zu dem ersten Teil beweglich, vornehmlich vertikal beweglich, angeordnet sind. Ein zweites Teil bildet einen Gegenanschlag für eine auf die Gewinde-Teilstücke wirkende Druckfeder. Die bekannte Mutter kann auf einen Gewindebolzen aufgeschoben werden, wobei die zurückweichenden Gewinde-Teilstücke ein Überlaufen des Gewindes ermöglichen. Wenn sodann die Mutter gedreht wird, greifen die Gewinde-Teilstücke in das Gewinde des Bolzens ein und die Mutter kann festgezogen werden. Eine weiter vorgesehene, drehbeweglich mit dem ersten Teil verbundene Unterlegscheibe, die zudem mit einer formschlüssig an der Mutter festgelegten Federkammer verbunden ist, erbringt zufolge Spannung der Feder beim Anziehen der Mutter und Aufliegen der Unterscheibe auf einem zu spannenden Gegenstand eine ständige Vorspannung der Mutter in Verschlussrichtung, so dass einem Lösen entgegengewirkt ist.

Mutter-Sicherungssysteme sind auch in weiteren Ausgestaltungen bekannt. Es wird beispielsweise auf die DE 197 01317 B4, die EP 2128 461 A1, die DE 198 25 132 A1 und die FR 2 762 367 A1 verwiesen.

Weiter ist zum Stand der Technik auf die US 4,781,507 A zu verweisen. Der hieraus bekannte Bolzen weist eine durchgehend gleiche Kontur auf und sowohl das erste wie das zweite Teil können über den Bolzen frei verschoben werden.

Gleiches betrifft auch einen weiteren Stand der Technik gemäß der GB 2140888 A.

Aus der DE 69214640 T2 ist die Kombination eines Bolzens mit einer Mutter bei einer Kabellängenjustiervorrichtung bekannt. Die erste Öffnung ist profillos ausgebildet und eine kleinere Kontur des Bolzens an seinem Einführende kann über das zweite Teil hinaus weitergeschoben werden und ist sodann wieder in dem ersten Teil aufgenommen.

Ausgehend von dem genannten Stand der Technik beschäftigt sich die Erfindung mit der Aufgabe, eine Kombination eines eine Querschnittsfläche aufweisenden Bolzens mit einer Mutter anzugeben, bei welcher die Mutter günstig auf dem Bolzen gesichert werden kann.

Diese Aufgabe ist beim Gegenstand des Anspruches 1 gelöst, wobei darauf abgestellt ist, dass in der Lösestellung die gemeinsame Öffnungskontur, d.h. die sich bei einer Übereinanderlage des ersten und zweiten Teile ergebende Gesamtöffnungskontur, hervorgerufen durch die Öffnungskontur des zweiten Teils, kleiner ist als eine Umfangskontur des Bolzens, wobei der Bolzen an seinem freien Ende, von welchem aus die Mutter aufgesetzt wird, zunächst eine kleinere Kontur aufweist, über welche die Öffnung des ersten Teil ohne Weiteres hinweggeschoben werden kann, welche kleinere Kontur des Bolzens aber in die Öffnungskontur des zweiten Teils einpasst, wobei das zweite Teil nicht über die kleinere Kontur des Bolzens hinaus weitergeschoben werden kann bzw. dass in einer Aufsetzrichtung der Mutter der Bolzen einen Einführabschnitt aufweist, der frei von Profilierungen ist, wobei die axiale Erstreckung des Einführabschnittes mindestens an die axiale Erstreckung der Öffnung der ersten Teils angepasst ist.

Die Öffnungskontur des zweiten Teils ist unrund.

Der Bolzen weist, jedenfalls an seinem freien Ende, eine hierauf abgestimmte Kontur auf. Die gegebenenfalls mit Spiel ineinander passend vorgesehenen Konturen des genannten Bolzens und des zweiten Teils bewirken bei einem Verdrehen der Mutter in der angesprochenen Weise, dass das zweite Teil sich nicht mitdreht. Dies kann in vielfältiger Hinsicht genutzt sein. In einfachster Weise etwa als Indikator, beispielsweise farblich oder geometrisch weiter ausgestaltet, der dem Nutzer anzeigt, dass die zur Hinderung eines Abziehens erforderliche Verdrehung der Mutter vorgenommen ist. Auch ohne gesonderte Ausbildung kann die Relativdrehung des ersten und zweiten Teils zueinander erkannt werden. Bevorzugt ist die Profilierung mit dem ersten Teil fest verbunden bzw. weiter bevorzugt einstückig hiermit ausgebildet.

Hiermit ist eine einfach auf einen Bolzen aufzubringende Sicherungsmutter geschaffen. Zufolge Verdrehen der Mutter ist die Abzugssicherung gegeben, wobei zugleich die unrunde Öffnungskontur das zweiten Teils dazu genutzt sein kann, dass das zweite Teil sich nicht mitdreht und hieraus Nutzen gezogen werden kann.

Die Umfangskontur des Bolzens ist derart angepasst an die Öffnungskontur des zweiten Teils, dass das Bolzenteil in die Öffnung einführbar, aber nicht darin drehbar ist. Hierdurch kann die Mutter in einfacher Weise auf das Bolzenteil aufgeschoben werden und dann so verdreht werden, dass die Profilierungen der Mutter und des Bolzenteils ineinandergreifen, wobei bei dieser Drehung das zweite Teil sich nicht mit dem ersten Teil dreht, so dass in allgemeinster Hinsicht, wie weiter oben schon angegeben, das zweite Teil als Indikator dafür nutzbar ist, dass die Mutter auf dem Bolzenteil gesichert ist, nämlich die Profilierungen ineinandergreifen und ein Abziehen der Mutter von dem Bolzen ohne weitere Drehung oder Rückdrehung nicht möglich ist.

Im Hinblick auf die mangelnde Drehbarkeit des Bolzenteils in der Öffnung des zweiten Teils kann eine Drehung um wenige Winkelgrade, beispielsweise 0,1 bis 20 Winkelgrade, gleichwohl möglich sein. Wesentlich ist, dass es zufolge der mangelnden Drehbarkeit zu einem Mitschleppen des zweiten Teils durch den Bolzen bei Drehung des Bolzens in die Mutter kommt.

Die hier wesentlichen Gestaltungen der Mutter, betreffend insbesondere die Profilierung und die Zuordnung von erstem und zweiten Teil und deren Gestaltung, können auch in einem Plattenteil ausgebildet sein, das drehbar sein kann aber auch feststehend vorgesehen sein kann. In letzterem Fall wird dann in der Regel nur der Bolzen relativ zu dem Plattenteil gedreht.

Es ist zunächst bevorzugt, dass das zweite Teil relativ zu dem ersten Teil um die Drehachse winkelbegrenzt drehbar ist. Dies kann der Tatsache Rechnung tragen, dass auf dem Bolzenteil in Umfangsorientierung die Profilierung auch nur teilweise ausgebildet ist. So kann die Winkelbegrenzung derart angepasst sein, dass sich eine möglichst vollständige Überdeckung der Profilierungen im verdrehten Zustand des ersten Teils ergibt.

Weiterhin ist auch bevorzugt, dass zum Verlassen der Verdrehstellung ein Widerstand zu überwinden ist. Dies kann eine gewünschte Sicherung der Verdrehstellung ergeben. In einer weiteren Ausgestaltung ist vorgesehen, dass die Teile in der Verdrehstellung formschlüssig zueinander gesichert sind. Weiter bevorzugt zufolge einer Verrastung. Hierbei ist die Verdrehstellung nicht durch ein ledigliches, gegebenenfalls auch kraftbetontes, Verdrehen der Teile zueinander aufhebbar, sondern es muss beispielsweise auf ein die Verrastung sicherndes Teil, beispielsweise einen Knopf, eingewirkt werden, beispielsweise ein Anheben oder Andrücken oder auch Drehen eines die Verrastung sichernden Teiles erfolgt. Es kann auch vorgesehen sein, dass nur eine Einmal-Verrastung durchgeführt werden kann. Ohne besondere Maßnahmen, beispielsweise eine aufwändige Demontage, kann dann die Verriegelungsstellung nicht mehr aufgehoben werden.

Weiter ist auch bevorzugt, dass die Teile in ihre unverdrehte Stellung, die Lösestellung, vorgespannt sind. Dies sichert die Möglichkeit, eine Mutter jeweils frei auf einen Bolzen aufschieben zu können ohne zuvor auf eine hierfür geeignete Drehstellung der Teile zueinander achten zu müssen. Wenn im Zuge eines Lösens der Mutter von dem Bolzen die Verdrehstellung verlassen wird, ergibt sich selbsttätig ein Einnehmen der unverdrehten Stellung der Teile, d. h. der Lösestellung, zueinander.

Darüber hinaus ist bevorzugt, dass die Öffnungskontur des zweiten Teils in senkrechter Projektion zumindest teilweise radial innen bezüglich der Profilierung des ersten Teils verläuft. Die unrunde Gestaltung ist insbesondere im Überdeckungsbereich zu der Profilierung des ersten Teils, bezogen auf die Lösestellung, gegeben. In Überdeckung zu einem nicht profilierten Umfangsabschnitt des ersten Teils ist in der Lösestellung die Öffnungskontur des zweiten Teils bevorzugt an einer Kreisform orientiert. Hierbei kann die Kreisform gebildet sein auf Basis des größten Öffnungsmaßes der Öffnungskontur der zweiten Öffnung, bezogen auf eine die Öffnungskontur durchsetzende Mittelachse oder auf eine bei Aufsetzen der Mutter auf einen Bolzen den Bolzen durchsetzende Drehachse. Dieses größte Öffnungsmaß kann entsprechend das Durchmessermaß der Kreisform sein. Ergänzend oder alternativ kann vorgesehen sein, dass die Öffnungskontur des zweiten Teils in ihrer größten Erstreckung eine Abmessung aufweist, welche in senkrechter Projektion eine bezüglich der Profilierung des ersten Teils bis zur Profilierungsspitze reichendes Durchmessermaß der Mutter übertrifft und in ihrer kleinsten Erstreckung eine Abmessung, welche geringer ist als das genannte Durchmessermaß.

Weiter bevorzugt setzt sich als die Kontur des zweiten Teils teilweise aus einem an einer Kreisform orientierten Abschnitt und teilweise aus einem nicht an einer Kreisform orientierten Abschnitt, insofern bevorzugt aus den Langseiten eines Rechteckabschnittes, zusammen.

Das erste und das zweite Teil sind in Axialrichtung zumindest teilweise und jedenfalls hinsichtlich ihrer Eingriffsabschnitte hintereinander angeordnet. Der Eingriffsabschnitt des zweiten Teils ist die konturierte Öffnung, die sich real über eine gewisse Höhe, in Axialrichtung der Drehachse, erstreckt. Der Eingriffsabschnitt des ersten Teils ist der mit der Profilierung versehene Teil der Öffnung. Die Profilierung erstreckt sich über eine gewisse Höhe in Achsrichtung der Drehachse. Es sind bevorzugt eine Mehrzahl von Profilierungen, beispielsweise auch Gewindegänge, in Axialrichtung der Drehachse hintereinander ausgebildet. Beispielsweise drei oder mehr bis hin zu hundert oder tausend Profilierungen hintereinander. Dies betrifft sowohl die Profilierungen der Mutter wie auch die Profilierungen des Bolzens. Das erste und das zweite Teil können sich auch in Überdeckung zueinander befinden. Das eine Teil kann in dem anderen aufgenommen sein. Bevorzugt ist das zweite Teil in dem ersten Teil aufgenommen. Bevorzugt ist auch, dass die Erstreckung des zweiten Teils in Richtung der Drehachse kürzer ist als die Erstreckung des ersten Teils. Dies betrifft in weiterer Einzelheit auch die Erstreckung der Innenfläche des ersten Teils, die mit einer Profilierung ausgebildet ist. Weiter bevorzugt beträgt die Erstreckung des Eingriffsabschnitts des zweiten Teils etwa 1/20 bis 1/2 der Erstreckung des Profilierungsabschnittes des ersten Teils in Achserichtung der Drehachse.

Im Falle der Verrastbarkeit der Teile zueinander ist zur Lösung der Verraststellung bevorzugt ein relativ zu dem ersten und/oder zweiten Teil bewegliches Löseteil vorgesehen. Das Löseteil kann beispielsweise quer zur Erstreckungsrichtung der Drehachse zu betätigen sein. Das Löseteil kann alternativ oder ergänzend auch durch Drehen um die Drehachse zu betätigen sein.

Eine größte Querschnittsabmessung des Bolzens ist bevorzugt größer als eine größte Querschnittsabmessung des Bolzens im Bereich eines Profilierungsgrundes, in dem Abschnitt des Bolzens, in dem Profilierungen ausgebildet sind. Weiter bevorzugt ist die axiale Erstreckung dieses profilfreien Abschnittes bzw. des Einführabschnittes mindestens an die axiale Erstreckung der Öffnung des zweiten Teils angepasst. Beim Aufsetzen der Mutter auf den Bozen hat dies zur Folge, dass die Mutter erst in eine Eingriffsstellung verdreht werden kann, wenn sie hinsichtlich ihres Profilierungsabschnittes vollständig in Überdeckung zu der Profilierung des Bolzens ist. Denn zuvor kann wegen dann eintretender Kollision der an der Innenfläche der Mutter ausgebildeten Umfangsprofilierung mit dem profilierungsfreien, aber entsprechend durchmessergroßen Bereich des Bolzens, keine Verdrehung stattfinden. Wenn die Verdrehung stattfinden kann, ist dann aber auch bevorzugt bereits das zweite Teil über den genannten profilierungsfreien Bereich des Bolzens übergefahren, so dass auch zugleich sichergestellt ist, dass die Relativverdrehung der Teile zueinander erfolgt. Letzteres ist dadurch bevorzugt erreicht, dass sich unmittelbar an, in Achsrichtung gesehen, das Ende der Profilierung der Mutter die zweite Öffnung des zweiten Teils anschließt.

Die genannte Profilierung an der Mutter und/oder dem Bolzen kann insbesondere in Form von einem oder mehreren Gewindegängen ausgebildet sein.

Im Falle von Gewindegängen ist insbesondere auch bevorzugt, dass das Gewinde ein Linksgewinde ist. Hiermit lässt sich beim Einnehmen der Verdrehstellung sicherstellen, dass die Verdrehung immer ohne vorzeitiges Klemmen des mittels der Mutter beispielsweise an dem Bolzen zu sichernden Gegenstandes ermöglicht ist. Denn die Mutter bewegt sich zufolge des Linksgewindes beim Einnehmen der Drehstellung um ein, wenn auch geringes, Maß von dem zu sichernden Gegenstand jeweils weg. Dies ist jedenfalls dann vorteilhaft, wenn der auf dem Bolzen gesicherten Mutter die Funktion eines Anschlagteiles zukommt. Soll die Mutter aber beispielsweise als Feststellteil dienen, kann sich auch eine anziehende Wirkung beim Verdrehen empfehlen, also ein Rechtsgewinde. Bei Ausbildung einer Profilierung kann auch ein Verlauf der bevorzugt mehrfach in Richtung der Drehachse übereinander vorgesehenen Profilierungsausformungen vorgesehen sein, der beim Verdrehen der Mutter keine Bewegung der Mutter in Richtung der Drehachse bewirkt.

In weiterer Einzelheit ist auch bevorzugt, dass die Profilierung des ersten Teils, gegebenenfalls die Gewindeausformungen, nur über zwei Drittel oder weniger der Innenfläche des ersten Teils der Mutter ausgebildet ist. Weiter bevorzugt sind, insbesondere nur, zwei Profilierungsabschnitte in Umfangsrichtung voneinander getrennt, so dass auch - bevorzugt: nur - zwei profilierungsfreie Bereiche ausgebildet sind. Die Bereiche mit Profilierung und ohne Profilierung sind darüber hinaus bevorzugt jeweils deckungsgleich sich gegenüberliegend ausgebildet. Weiter bevorzugt sind die Bereiche jeweils entsprechend einer Zylinderfläche ausgebildet. Die Profilierung weist zufolge der Unterbrechungen in Umfangsrichtung für jeden einer bevorzugten Mehrzahl von übereinander angeordneten Einzelprofilierungen einen Anfangsbereich und ein Endbereich auf. Bevorzugt sind die Anfangs- und/oder Endbereiche gerundet oder abgeflacht ausgebildet, weiter bevorzugt auch die Endbereiche der korrespondierenden Profilierung an dem Bolzen oder auch nur die Endbereiche der genannten Profilierung an dem Bolzen. Insbesondere dann, wenn die Profilierung aus Gewindegängen bzw. Gewindegang-Abschnitten besteht. Die Rundung oder Abflachung ist bevorzugt eine Spitzenverrundung oder -abflachung, so dass sich ein Einweisereffekt ergibt. Die Verrundung kann beispielsweise dadurch erreicht sein, dass eine Profilierungs- oder spezieller eine Gewindegang-Spitze durch ein "Abtauchen" der Profilierung bzw. des Gewindegangs in Erstreckungsrichtung der Profilierung bzw. des Gewindegangs in das umgebende Material gegeben ist.

Die Mutter kann an ihrer Außenfläche eine übliche Konturierung besitzen. Sie kann auch im Grundriss bezüglich der Außenfläche rund gestaltet sein.

Weiter ist bevorzugt, dass das Löseteil in eine die Verrastungsstellung kennzeichnende Ausfahrstellung vorgespannt ist. Entsprechend ist die Verrastungsstellung bei Druck auf das oder Bewegung des Löseteils gegen Federkraft, die sich durch Eindrücken oder Bewegen des Löseteils ergibt, zu lösen. So kann eine selbsttätige Verrastung bei Erreichen eines vorgegebenen Verdrehwinkels zwischen dem ersten und dem zweiten Teil erreicht werden. Ein Herausfahren oder Herausspringen des Löseteils relativ zu einer äußeren Fläche, insbesondere Umfangsfläche, der Mutter, erbringt überdies eine gewünschte Indikation für ein Erreichen der gesicherten Raststellung. Alternativ kann auch vorgesehen sein, dass zum Erreichen der Verrastung aktiv eine Bewegung eines Rastteils, beispielsweise ein Eindrücken oder Herausziehen, vorgenommen werden muss.

Es kann auch vorgesehen sein, dass mehrere Raststellungen für unterschiedliche Verdrehwinkel des ersten und des zweiten Teils vorgesehen sind.

Das Bolzenteil weist bevorzugt einen rechteckigen Querschnitt auf. Hierbei sind zwei gegenüberliegende Flachseiten bevorzugt profilierungs- bzw. gewindefrei ausgebildet während zwei weitere gegenüberliegende Seiten des im Wesentlichen rechteckigen Querschnitts gerundet und mit Gewinde oder Profilierung ausgebildet sind.

Die Öffnungskontur des zweiten Teils der Mutter ist entsprechend hieran angepasst auch im Wesentlichen rechteckig, mit zwei gerade verlaufenden und zwei abgerundet verlaufenden, bevorzugt auch jeweils sich gegenüberliegend ausgebildeten, Begrenzungslinien. Bevorzugt sind zwei Langseiten und zwei Kurzseiten gegeben. Weiter bevorzugt ist eine gerade verlaufende Begrenzungslinie an der Langseite ausgebildet.

Weiter ist bevorzugt, dass in der unverdrehten Stellung die Profilierung des ersten Teils in einer axialen Projektion sich zumindest teilweise radial außerhalb bezüglich einer Konturlinie, gegebenenfalls bezüglich der gerade verlaufenden Begrenzungslinie, befindet. Insgesamt ist bevorzugt, beim ersten Teil aufgrund der Profilierung, dass beide Öffnungen eine unrunde Öffnungskontur aufweisen, wobei diese Öffnungskonturen zueinander unterschiedlich sind. Weiter bevorzugt sind auch die Abweichungen von einer, bezogen auf ein größtes Öffnungsmaß, kreisförmigen Öffnungskontur bei dem zweiten Teil größer als bei dem ersten Teil. Hierbei ist die Abweichung betragsmäßig zu verstehen. Die Flächenanteile, die bezogen auf eine ideale kreisförmige Öffnungskontur radial außerhalb der Öffnungskontur liegen, sind entsprechend dann bei dem zweiten Teil größer als bei dem ersten Teil.

Die vor- und nachstehend angegebenen Bereiche bzw. Wertebereiche schließen hinsichtlich der Offenbarung auch sämtliche Zwischenwerte ein, insbesondere in 1/10-Schritten, in ihrer jeweiligen Dimension bzw. gegebenenfalls dimensionslos, einerseits zur Eingrenzung der genannten Bereichsgrenzen von unten und/oder oben, alternativ oder ergänzend aber auch im Hinblick auf die Offenbarung eines oder mehrerer singulärer Werte aus einem jeweiligen Bereich.

Nachstehend ist die Erfindung weiter anhand der beigefügten Zeichnung erläutert, die aber lediglich Ausführungsbeispiele darstellt. Hierbei zeigt:
- Fig. 1: eine perspektivische, teilweise in Explosionsart vorgenommene Darstellung eines hydraulischen Verpressgerätes mit einem Bolzenteil, einem an dem Bolzenteil zu sichernden Werkzeug und einer verrastbaren Schnellwechselmutter;
- Fig. 2: eine Ansicht des Bolzenteils mit aufgesetzter Mutter;
- Fig.. 3: einen Querschnitt durch den Gegenstand gemäß Fig. 2, geschnitten entlang der Linie III-III;
- Fig. 4: eine Darstellung gemäß Fig. 3, jedoch bei zueinander verdrehtem ersten und zweiten Teil der Mutter, wobei die Mutter sich in der Verrastungsstellung befindet;
- Fig. 5: eine Darstellung gemäß Fig. 4, jedoch geschnitten im Bereich des Löseteils;
- Fig. 6: einen weiteren Schnitt durch die auf den Bolzen aufgebrachte Mutter, in der Verdrehstellung, geschnitten durch die Gewindebereiche der Mutter;
- Fig. 7: eine Explosionsdarstellung der Mutter und zugehörigem Bolzen;
- Fig. 8: eine Darstellung gemäß Fig. 7, jedoch gesehen von schräg unten;
- Fig. 9: einen Querschnitt durch den Gegenstand gemäß Fig. 2, geschnitten entlang der Linie IX-IX;
- Fig. 10: eine Darstellung gemäß Fig. 9, in der Verdrehstellung;
- Fig. 11: eine Darstellung gemäß Fig. 8, einer weiteren Ausführungsform;

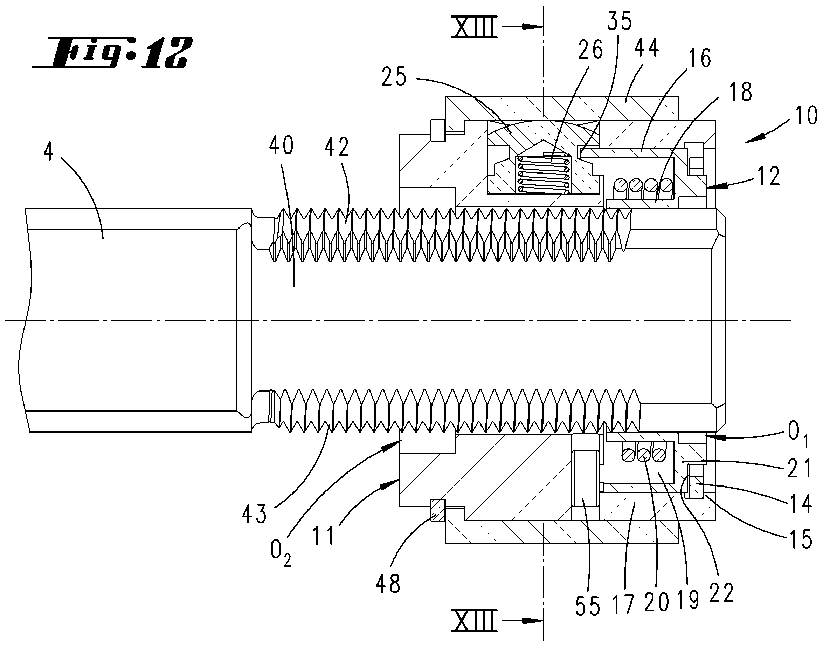

- Fig. 12: einen Querschnitt durch die auf den Bolzen bei der Ausführungsform der Fig. 11 aufgesetzte Mutter, in der Lösestellung;
- Fig. 13: einen Querschnitt durch den Gegenstand gemäß Fig. 12, geschnitten entlang der Linie XIII-XIII;

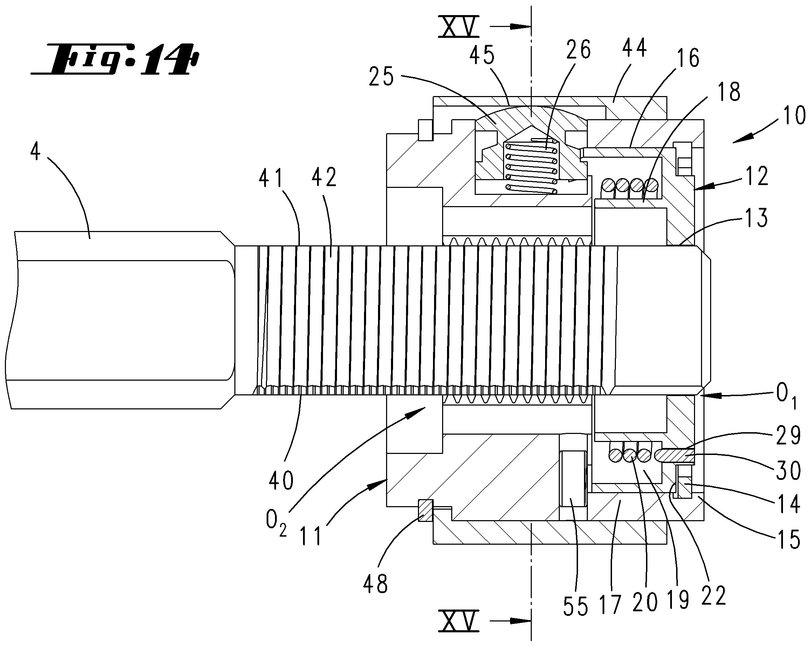

- Fig. 14: eine Darstellung gemäß Fig. 12, in der Verdrehstellung;
- Fig. 15: einen Querschnitt durch den Gegenstand gemäß Fig. 14, geschnitten entlang der Linie XV-XV;
- Fig. 16: eine Darstellung des Bolzens mit einer Herausvergrößerung von Profilierungen bzw. Gewindegängen am Bolzen.

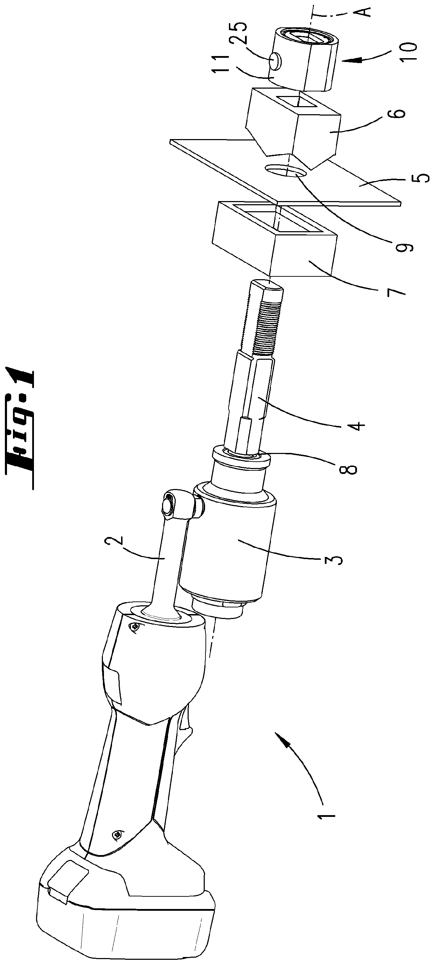

Dargestellt und beschrieben ist, zunächst mit Bezug zu Fig. 1, ein elektrohydraulisches Handgerät 1, das, soweit es hier nicht im Einzelnen dargestellt ist, beispielsweise gemäß der US 7 421 877 B2 ausgebildet ist, wobei jedoch zunächst, anstelle des Arbeitskolbens, der in einem Zylinder beweglich aufgenommen ist, an die auf den Pumpkolben anschließende Druckleitung sich eine frei stehende Hydraulikleitung 2 anschließt, die in den Zylinder 3 mündet, in dem ein hinsichtlich des Arbeitshubes zurücklaufender Kolben angeordnet ist, mit welchem ein Bolzen 4 zurückgezogen werden kann.

Mittels dieses Werkzeuges kann beispielsweise in einem Blech 5 ein Loch gestanzt werden, mittels eines Stanzwerkzeuges 6 und eines Gegenhalters 7. Der Gegenhalter 7 wird entsprechend über den Bolzen 4 geführt und kann auf einer Schulter 8 des Bolzens zum Aufliegen kommen. Sodann wird der Bolzen durch die bereits vorhandene Öffnung 9 in dem Blech 5 geführt und auf der Rückseite des Bleches 5 dann das Werkzeug 6 auf den Bolzen 4 aufgeschoben und schließlich die Mutter 10 aufgeschoben und im aufgeschobenen Zustand dann durch Drehung um eine Bolzenachse verriegelt. Hierbei wird eine Verrastung erzielt, wie nachstehend noch erläutert, wobei dann beispielsweise ein Löseteil 25 ausfährt.

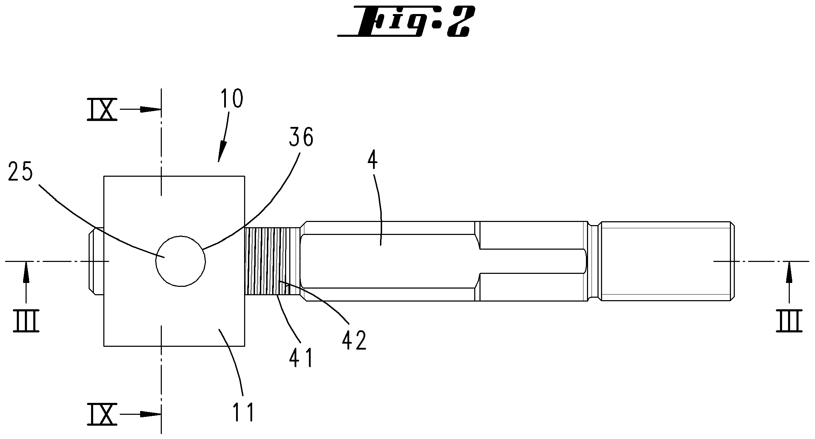

Der verriegelte Zustand der Mutter 10 auf dem Bolzen 4 ist in Fig. 2 dargestellt. Die Mutter 10 befindet sich relativ zu dem Bolzen 4 in der Verdrehstellung.

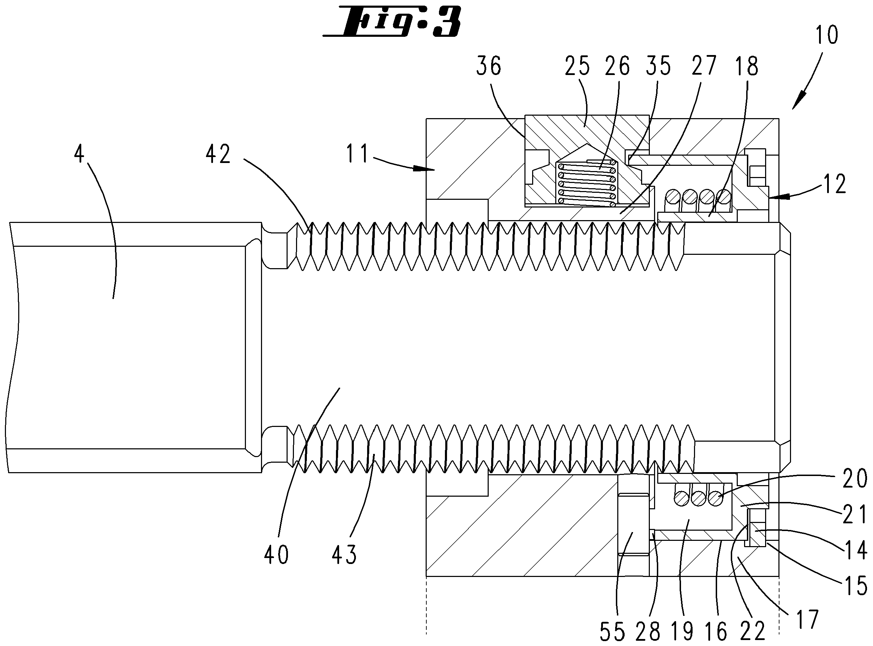

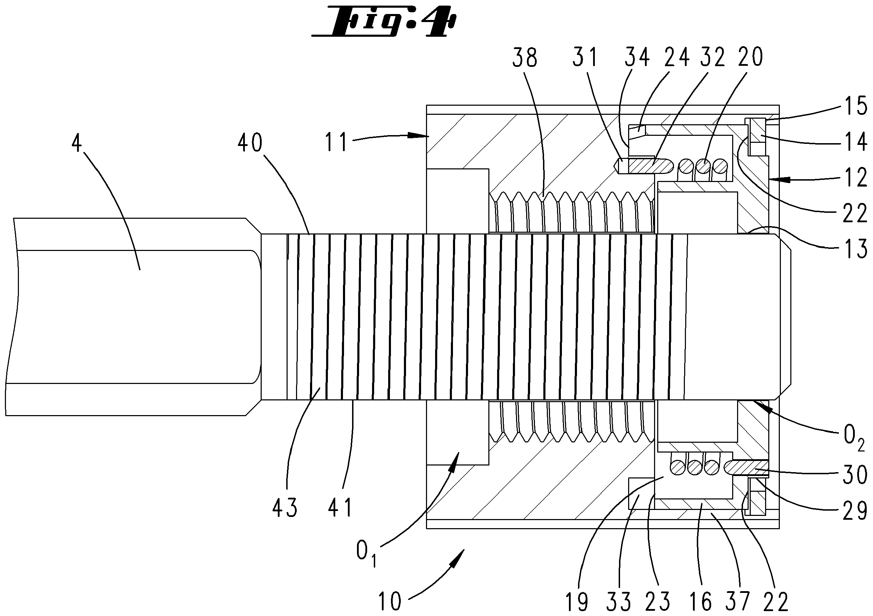

Mit Bezug zu den Fig. 3 bis 10 ist der Aufbau der Mutter und die Verriegelung weiter erläutert. In Fig. 3 ist auch durch gestrichelte Linien angedeutet, dass die im Hinblick auf die Mutter bezogenen Ausgestaltungen auch in einem Plattenteil ausgebildet sein können.

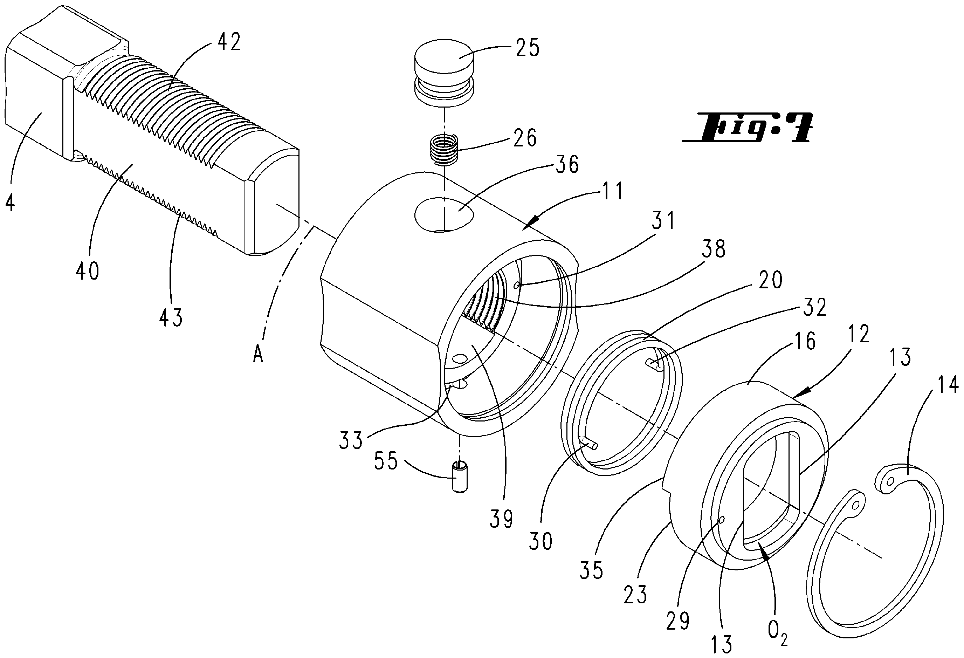

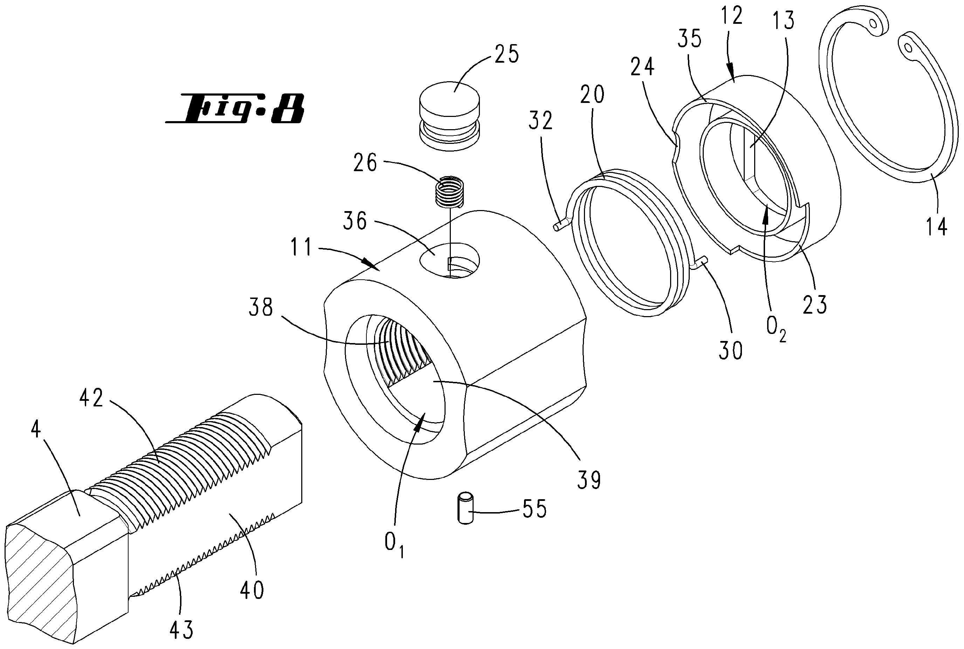

Die Mutter 10 weist zunächst ein erstes Teil 11 auf mit einer durchgehenden ersten Öffnung O₁ (vgl. etwa Fig. 8) und ein zweites Teil 12 mit einer durchgehenden Öffnung O₂ (vgl. hierzu auch Fig. 7).

Die Öffnung O₂ weist eine durch die Randkante 13 begrenzte Öffnungskontur auf. Die Öffnungskontur der zweiten Öffnung O₂ ist unrund. Speziell beim Ausführungsbeispiel ist die Öffnung O₂ mit einer rechteckigen Öffnungskontur ausgebildet, wobei die Langseiten geradlinig ausgebildet sind, die Schmalseiten jedoch konkav verrundet.

Eine Drehachse A durchsetzt beide Öffnungen O₁, O₂. Bevorzugt, und beim Ausführungsbeispiel verwirklicht, ist die Drehachse A die gemeinsame Drehachse des ersten Teils 11 und des zweiten Teils 12. Die Drehachse A ist bevorzugt auf die Mittelachse des ersten Teils 11 und/oder des zweiten Teils 12.

Die Teile 11, 12 sind drehbar miteinander verbunden.

Zur drehbaren Verbindung der beiden Teile 11, 12 ist das zweite Teil 12 in das erste Teil 11 eingesetzt. In weiterer Einzelheit ist eine formschlüssige Halterung des zweiten Teils 12 in dem ersten Teil 11 gegeben. Beim Ausführungsbeispiel bevorzugt durch einen Sprengring 14, der in einen Hinterschnitt 15 des ersten Teils 11 eingreift. Eine Umfangsfläche der Mutter ist, mit Ausnahm gegebenenfalls des Löseteils 25, allein durch die Mutter 11 gebildet.

Das zweite Teil 12 weist eine erste Wandung 16 auf, die sich innerhalb einer Außenwandung 17 des ersten Teils 11 erstreckt. Die erste Wandung 16 sorgt bevorzugt für eine Drehführung des zweiten Teils 12 an dem ersten Teil 11.

Weiter kann, wie beim Ausführungsbeispiel vorgesehen, das zweite Teil 12 eine zweite Wandung 18 aufweisen, die sich bezüglich der ersten Wandung 16 nach radial innen versetzt erstreckt. Die erste Wandung 16 und/oder die zweite Wandung 18 erstrecken sich bevorzugt in Richtung der Achse A, weiter bevorzugt parallel hierzu. Zwischen der ersten Wandung 16 und der zweiten Wandung 18 ist ein nach unten, d. h. beispielsweise dem Profilierungsbereich des ersten Teils 11 zugewandt, offener Zwischenraum 19 belassen. Die erste Wandung 16 und die zweite Wandung 18 sind bevorzugt konzentrisch zueinander und weiter bevorzugt mit jeweils kreisförmigem Grundriss ausgebildet. Die Wände 16 und 18 sind über einen Steg 21 U-förmig verbunden. Der Steg 21 ist oberseitig gestuft ausgebildet. Die Stufe öffnet sich bevorzugt nach radial außen. Bevorzugt sitzt auf einer unteren Stufenfläche 22 der Sprengring 14 auf. Wie sich etwa aus Fig. 8 ergibt, ist die erste Wandung 16 des zweiten Teils 12 unterseitig bevorzugt profiliert. Die erste Wandung 16 weist beispielsweise einen Umfangsausschnitt 23 auf. Weiter vorzugsweise eine Positionsausnehmung 24.

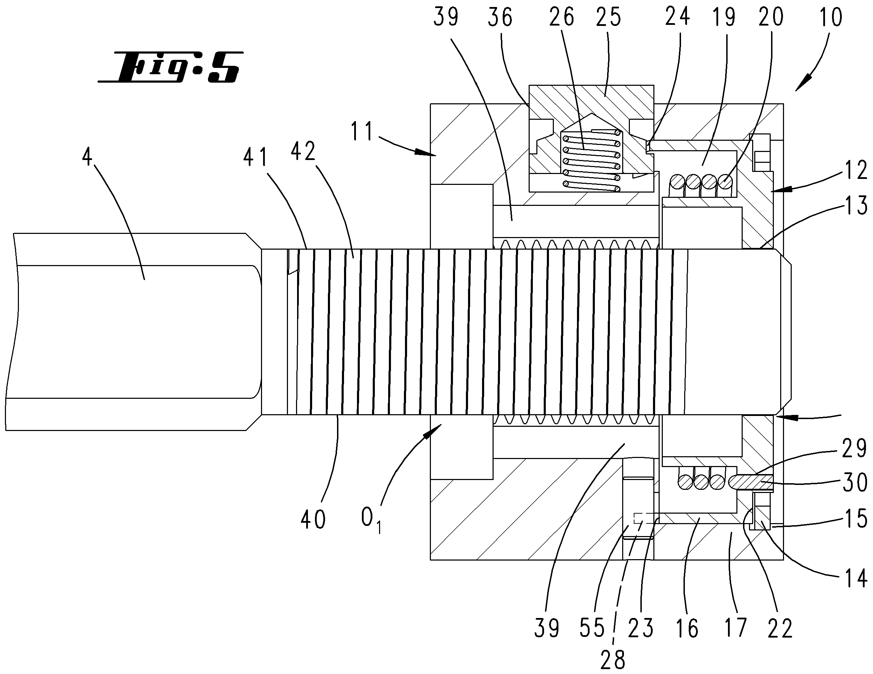

Die Umfangsausnehmung 23 kann zur Winkelbegrenzung der Verdrehbarkeit des zweiten Teils 12 relativ zu dem ersten Teil 11 dienen. Die Positionsausnehmung 24 ermöglicht es bevorzugt dem Löseteil 25 in der Verdrehstellung bzw. Verrastungsstellung aus einer eingefahrenen Stellung gemäß Fig. 3 in die ausgefahrene Stellung gemäß Fig. 5 zu verfahren. Das Löseteil 25 ist hierfür mittels einer Druckfeder 26 gegen eine radial innen in Überdeckung befindliche Wandung 27 des ersten Teils 11 nach außen vorgespannt.

Das Ausfahren des Löseteils 25 in der Verdrehstellung, wodurch die Verrastung gegeben ist, wie beim Ausführungsbeispiel vorgesehen, hat auch den Vorteil eines Indikators. Insbesondere eines taktil erfassbaren Indikators.

Um aus der Verdrehstellung gemäß Fig. 5, in der die Mutter auf dem Bolzen nicht abziehbar gesichert ist, wieder in die Lösestellung gemäß Fig. 3 zu verfahren, muss bei dem Ausführungsbeispiel der Fig. 1 bis 10 unmittelbar durch einen Benutzer das Löseteil 25 nach radial innen gegen die Feder 26 gedrückt werden. Aufgrund der in der Verrastungsstellung gemäß Fig. 5 zufolge einer Spannung der Feder 20 gegebenen Vorspannung der Teile 11 und 12 zueinander in die Lösestellung gemäß Fig. 3 verdreht sich nahezu selbsttätig das erste Teil 11 bei einem Niederdrücken des Löseteils 25 in der Stellung der Fig. 5 relativ zu dem zweiten Teil 12 wieder in die Stellung gemäß Fig. 3.

Die beschränkte Verdrehbarkeit des ersten Teils 11 relativ zu dem zweiten Teil 12 zufolge der Umfangsausnehmung 23 ist weiter bevorzugt durch ein drehfest mit dem ersten Teil 11 verbundenes oder in sonstiger Weise an dem ersten Teil 11 ausgeformtes Anschlagteil 28 gesichert.

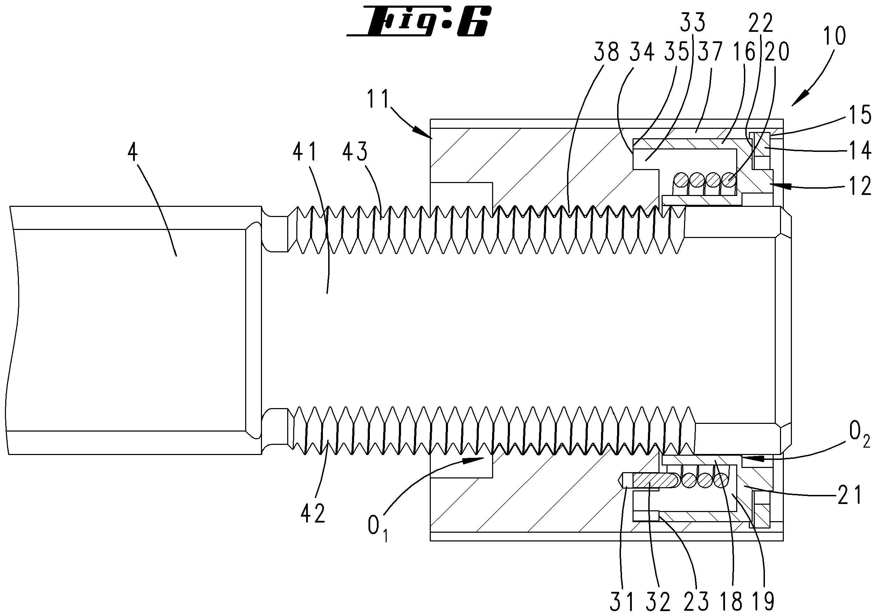

Die Feder 20 ist sowohl an dem ersten Teil 11 wie an dem zweiten Teil 12 gesichert. Bevorzugt ist die Feder 20 einerseits mittels eines in eine Bohrung 29 des zweiten Teils 12 eingreifenden Endes 30 in dem zweiten Teil 12 gesichert und andererseits mittels eines in eine Bohrung 31 des ersten Teils 11 eingreifenden zweiten Endes 32 in dem ersten Teil 11. Wie weiter insbesondere aus Fig. 6 zu entnehmen ist, bildet das erste Teil 11 zugewandt dem zweiten Teil 12 eine ringförmig umlaufende, nach oben Ausnehmung 33 aus. Auf dem ebenflächigen Boden 34 der Ausnehmung 33 stützt sich die Unterfläche 35 der Wandung 16 des zweiten Teiles 12 ab, mit Ausnahme des Bereiches der Umfangsöffnung 23 und der Positionsausnehmung 24.

In die Ausnehmung 33 ragt der beim Ausführungsbeispiel durch einen Zapfen 55 gebildete Anschlag 28.

Die Ausnehmung 33 geht im Bereich des Löseteils 25 in eine Rundungsausnehmung 36 über, welche über den sich oberhalb des Bodens 34 der Ausnehmung 33 anschließende Wandungsbereich 37 des ersten Teils 11 auch durchsetzt. Die Rundungsausnehmung 36 ist mit einer sich radial erstreckenden Mittelachse ausgebildet.

Das erste Teil 11 weist innenseitig eine Profilierung, bevorzugt Gewindeausformungen 38 auf. Es handelt sich um zwei gegenüberliegend ausgebildete Gewindeausformungen 38, die durch eine gewindefreie Fläche 39, von denen auch entsprechend zwei gegenüberliegende ausgebildet sind, unterbrochen sind. Die Fläche 39 erstreckt sich auf einem dem Gewindegrund des Gewindes 38 entsprechenden Durchmesser. Die Gewindeausformungen 38 oder sonstige Profilierungen, wie eingangs ausgeführt, sind bevorzugt ausgehend von einer zylindrischen Grundfläche gebildet. Weiter vorzugsweise ist ihre radial innere spitzenseitige Begrenzung auch durch eine Zylinderfläche gegeben. Gegebenenfalls mit Ausnahme einer endseitig der Ausformung gegebenen Abflachung oder Rundung, wie weiter noch erläutert.

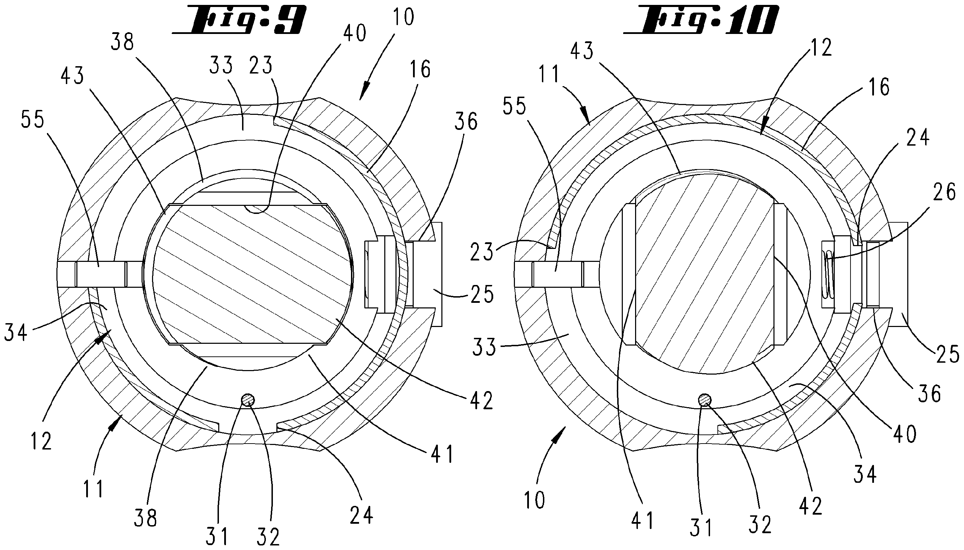

Der Bolzen 4 weist, wie sich insbesondere aus den Fig. 9 und 10 ergibt, einen im Wesentlichen rechteckigen Querschnitt auf mit zwei gegenüberliegenden, profilierungsfreien Seiten 40, 41 und zwei profilierten, beim Ausführungsbeispiel Gewindeausformungen aufweisenden Seiten 42, 43. Während die Seiten 40, 41 im Querschnitt geradverlaufend ausgebildet sind, sind die mit Gewinde versehenen Seiten 42, 43 in ihrer Kontur einer Kreislinie folgend ausgebildet.

Die Profilierungen des Bolzens bzw. der Mutter, speziell die Gewindeausformungen, sind einander ergänzend ausgebildet. Die Maße sind so gewählt, dass ein unmittelbares Ineinandergreifen, im Sinne von Gewinde und Gegengewinde, ermöglicht ist.

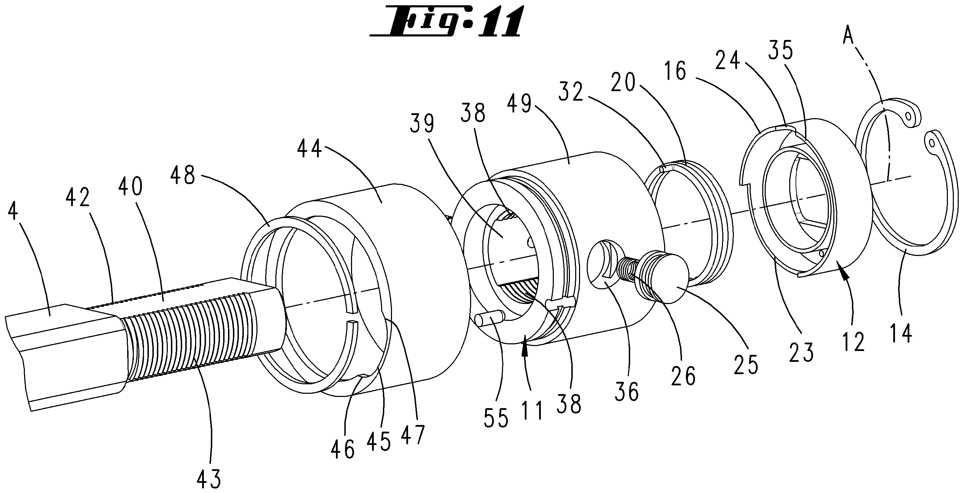

Mit Bezug zu Fig. 11 ist eine weitere Ausführungsform dargestellt.

Diese weitere Ausführungsform unterscheidet sich von der zuvor beschriebenen Ausführungsform insbesondere durch eine auf dem ersten Teil weiter angeordnete Drehhülse 44. Diese Drehhülse 44 ermöglicht eine Sicherung in der Verdrehstellung der Mutter durch Verdrehen der Drehhülse in eine Raststellung. In der Raststellung kann, insofern übereinstimmend mit der zuvor beschriebenen Ausführungsform, das nunmehr innerhalb der Verdrehhülse 44 angeordnete Löseteil 25 nach außen verfahren, auch hier unter Wirkung der Feder 26 und so die Verdrehstellung in gleicher Weise sichern wie bei der vorbeschriebenen Ausführungsform.

Die Drehhülse 44 hat den Vorteil, dass die Mutter frei über ihren ganzen Umfang zum Versetzen aus der Lösestellung in die Verdrehstellung angefasst werden kann.

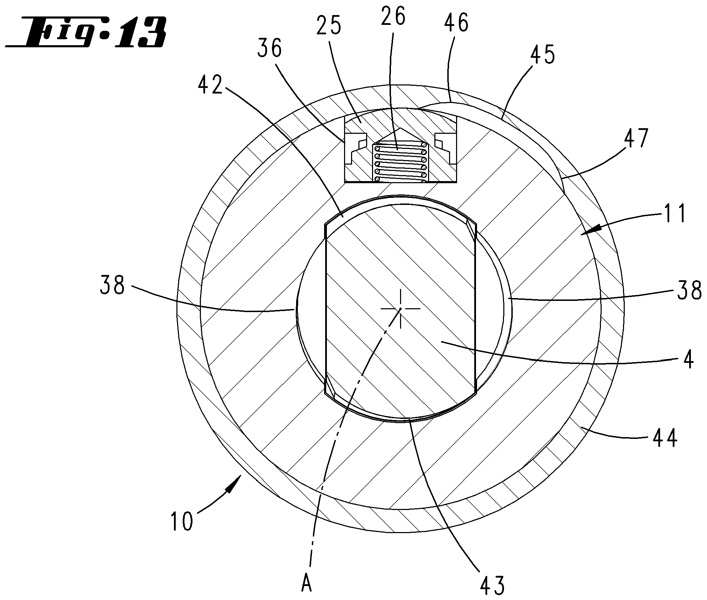

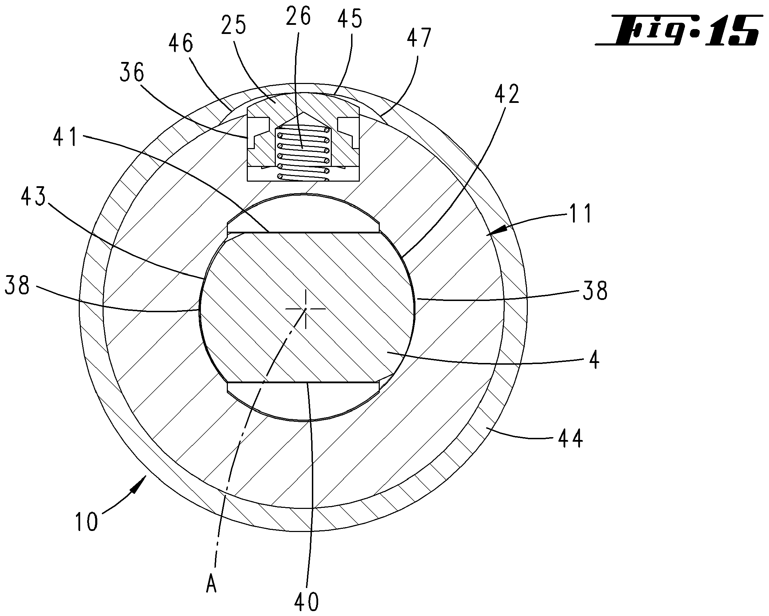

Die Drehhülse 44 weist innenseitig eine Ausnehmung 45 auf, die beim Ausführungsbeispiel im Sinne einer Wandungsverdünnung der Drehhülse 44 ausgeformt ist. Die Ausnehmung 45 weist im Querschnitt, also sich in Umfangsrichtung erstreckend, wie etwa aus Fig. 13 ersichtlich, abgerundete oder abgeschrägte Endbereiche 46, 47, auf, welche bei Verdrehung ein Niederdrücken des Löseteils 25 aus der Stellung gemäß Fig. 15 in die Stellung gemäß Fig. 13 ermöglichen.

Die Drehhülse 44 ist drehbar aber unverlierbar an dem ersten Teil 11 gesichert. Beim Ausführungsbeispiel durch einen Sprengring 48.

Weiter ist die Drehhülse bevorzugt nur winkelbegrenzt relativ zu dem ersten Teil 11 verdrehbar. Die Winkelbegrenzung kann beispielsweise durch einen Bolzen 49 erreicht sein, der teilweise in die Ausnehmung 45 vorsteht und hier mit der Abschrägung 46 oder 47 jeweils zusammenwirkt.

Im Übrigen sind gleiche Verhältnisse gegeben wie bei der erstbeschriebenen Ausführungsform.

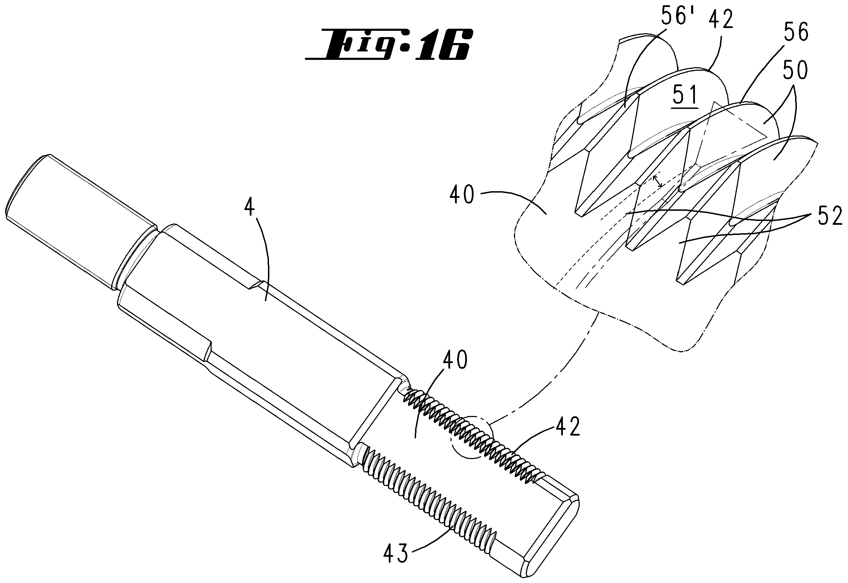

Bezüglich der Fig. 16 ist, vgl. auch die Lupendarstellung, eine Abflachung an einem Gewindegang oder grundsätzlich einer Profilierung, hier an dem Bolzen 4 aber auch, gestrichelt in der Lupendarstellung, an der Mutter, dargestellt. Die Abflachung dient zum leichteren Einpassen der Profilierungen ineinander beim Drehen in die Verriegelungsstellung. Wie ersichtlich ist eine Stirnfläche eines Gewindeganges 50 des Bolzens nicht entsprechend einer Radialen mit einer dann bezogen auf eine Umfangsrichtung senkrechten Fläche ausgebildet, sondern mit einer abgeflacht in das umgebende Material 51 einlaufenden Stirnfläche 52. Beim Ausführungsbeispiel weist das Gewinde auch eine Stirnkante oder Stirnfläche 53 auf. Diese Stirnkante 53 ist in einem Endabschnitt 54 schräg abfallend ausgebildet.

Bevorzugt ist bei der Mutter keine besondere Gestaltung vorgenommen oder nur eine entsprechend flache Stirnfläche52' vorgesehen. Gegebenenfalls kann aber auch hier ein abfallender Abschnitt 54' einer diesbezüglichen Stirnkante 53' vorgesehen sein.

Wesentlich ist, dass die Abmessungen immer so getroffen sind, dass sich noch eine deutliche Überdeckung a (mit schräg abfallendem Endabschnitt 54' bei der Mutter) bzw. b (ohne schräg abfallenden Abschnitt 54' bei der Mutter) zwischen den Stirnkanten der Gewinde ergibt.

Insbesondere sind in die Offenbarung vorliegender Anmeldung auch die Beschreibung und die Ansprüche der Stammanmeldung (WO 2012/019832 A1; PCT/EP2011/061475) vollinhaltlich mit eingeschlossen. Auch zu dem Zweck, Beschreibungsteile oder Ansprüche der Stammanmeldung, die in vorliegender Anmeldung nicht enthalten sind, ergänzend mit aufzunehmen oder vorliegend gegenüber der Stammanmeldung geänderte Beschreibungsteile oder Ansprüche durch die entsprechenden Beschreibungsteile oder Ansprüche der Stammanmeldung zu ersetzen, jeweils auch zu dem Zweck diesbezügliche Merkmale der Stammanmeldung in Ansprüche vorliegender Anmeldung mit aufzunehmen.

## Patentansprüche

1. Kombination eines eine Querschnittsfläche aufweisenden Bolzens (4) mit einer Mutter (10), wobei die Mutter (10) ein erstes Teil (11) aufweist, mit einer ersten Öffnung (Oi)und einer Innenprofilierung, und ein zweites Teil (12) mit einer zweiten Öffnung (O₂), wobei die Teile (11,12) um eine Drehachse (A) der Mutter (10) zueinander zwischen einer Lösestellung und einer Verdrehstellung drehbar verbunden sind und die Öffnungen (O₁, O₂) in Überdeckung sind und wobei darüber hinaus über die Länge des Bolzens (4) die Querschnittsfläche des Bolzens (4) zumindest teilweise eine Kontur aufweist, die mit der Öffnungskontur der zweiten Öffnung (O₂) derart übereinstimmt, dass der Bolzen (4) in die zweite Öffnung (O₂) einführbar ist aber nicht darin drehbar ist, **dadurch gekennzeichnet, dass** in der Lösestellung die gemeinsame Öffnungskontur, d.h. die sich bei einer Übereinanderlage des ersten und zweiten Teils (11,12) ergebende Gesamt-Öffnungskontur, hervorgerufen durch die Öffnungskontur des zweiten Teils (12), kleiner ist als eine Umfangskontur des Bolzens (4), wobei der Bolzen (4) an seinem freien Ende, von welchem aus die Mutter (10) aufgesetzt wird, zunächst eine kleinere Kontur aufweist, über welche die Öffnung des ersten Teils (11) ohne Weiteres hinweggeschoben werden kann, welche kleinere Kontur des Bolzens (4) aber in die Öffnungskontur des zweiten Teils (12) einpasst, wobei das zweite Teil (12) nicht über die kleinere Kontur des Bolzens (4) hinaus weitergeschoben werden kann.

2. Kombination nach Anspruch 1, **dadurch gekennzeichnet, dass** der Bolzen (4) zunächst, in einer Aufsetzrichtung der Mutter (10), einen Einführabschnitt aufweist, der frei von Profilierungen ist, wobei die axiale Erstreckung des Einführabschnitts mindestens an die axiale Erstreckung der Öffnung des zweiten Teils (12) angepasst ist.

3. Kombination nach einem der vorhergehenden Ansprüche, **dadurch gekennzeichnet, dass** der Bolzen (4) und die Mutter (10) zum Ineinandergreifen ausgebildete Profilierungen aufweisen.

4. Kombination nach einem der vorhergehenden Ansprüche, **dadurch gekennzeichnet, dass** die erste Öffnung (O₁) an ihrer Innenfläche eine sich in Umfangsrichtung erstreckende und in Umfangsrichtung unterbrochene Profilierung aufweist, wobei die Öffnungskontur der zweiten Öffnung (O₂) unrund ist.

5. Kombination nach einem der vorhergehenden Ansprüche, **dadurch gekennzeichnet, dass** das zweite Teil (12) relativ zu dem ersten Teil (11) um die Drehachse (A) winkelbegrenzt drehbar ist.

6. Kombination nach einem der vorhergehenden Ansprüche, **dadurch gekennzeichnet, dass** zum Verlassen der Verdrehstellung ein Widerstand zu überwinden ist und/oder dass die Teile (11,12) in ihre unverdrehte Stellung (Lösestellung) vorgespannt sind.

7. Kombination nach einem der vorhergehenden Ansprüche, **dadurch gekennzeichnet, dass** die Erstreckung des zweiten Teils (12) in Richtung der Drehachse (A) kürzer ist als die Erstreckung des ersten Teils (11).

8. Kombination nach einem der Ansprüche 2 bis 7, **dadurch gekennzeichnet, dass** die Profilierung in Form von einem oder mehreren Gewindegängen ausgebildet ist, vorzugsweise in Form eines Linksgewindes.

9. Kombination nach einem der vorhergehenden Ansprüche, **dadurch gekennzeichnet, dass** die Verdrehstellung verrastet ist.

10. Kombination nach Anspruch 9, **dadurch gekennzeichnet, dass** zur Lösung der Verdrehstellung ein relativ zu dem ersten und/oder zweiten Teil (11, 12) bewegliches Löseteil (25) vorgesehen ist.

11. Kombination nach Anspruch 10, **dadurch gekennzeichnet, dass** das Löseteil (25) quer zur Erstreckungsrichtung der Drehachse (A) oder durch Drehen um die Drehachse (A) zu betätigen ist.

12. Kombination nach einem der Ansprüche 3 bis 11, **dadurch gekennzeichnet, dass** die Profilierung zufolge der Unterbrechung in Umfangsrichtung für jeden einer bevorzugten Mehrzahl von übereinander angeordneten Einzelprofilierungen einen Anfangsbereich und einen Endbereich aufweist.

13. Kombination nach Anspruch 12, **dadurch gekennzeichnet, dass** die Anfangs- und/oder Endbereiche gerundet oder abgeflacht ausgebildet sind.

14. Kombination nach Anspruch 12, **dadurch gekennzeichnet, dass** die Profilierungen aus Gewindegängen bzw. Gewindegang-Abschnitten bestehen.

15. Kombination nach einem der vorhergehenden Ansprüche, **dadurch gekennzeichnet, dass** das Bolzenteil einen rechteckigen Querschnitt aufweist, wobei zwei gegenüberliegende Flachseiten profilierungs- bzw. gewindefrei ausgebildet sind, während zwei weitere gegenüberliegende Seiten gerundet und mit Gewinde oder Profilierung ausgebildet sind.

## Claims

1. Combination of a bolt (4) having a cross-sectional area with a nut (10), the nut (10) comprising a first part (11) having a first opening (O₁) and an inner profile, and a second part (12) having a second opening (O₂), the parts (11, 12) being connected so as to be rotatable relative to one another about an axis of rotation (A) of the nut (10) between a release position and a rotational position and the openings (O₁, O₂) overlapping one another and, furthermore, the cross-sectional area of the bolt (4) having, at least in part, a contour across the length of the bolt (4) that coincides with the opening contour of the second opening (O₂) such that the bolt (4) can be inserted into but not rotated in the second opening (O₂), **characterised in that**, when in the release position, the common opening contour, i.e. the entire opening contour resulting from the first and second part (11, 12) being superimposed, caused by the opening contour of the second part (12), is smaller than a circumferential contour of the bolt (4), the bolt (4) initially having, on the free end thereof to which bolt the nut is fixed (10), a smaller contour over which the opening of the first part (11) can be easily slid, which smaller contour of the bolt (4) nevertheless fits into the opening contour of the second part (12), it not being possible to slide the second part (12) beyond the smaller contour of the bolt (4).

2. Combination according to claim 1, **characterised in that** the bolt (4) initially has, in a direction in which the nut (10) is fixed, an insertion portion which is free of profiles, the axial extension of the insertion portion being adapted at least to the axial extension of the opening of the second part (12).

3. Combination according to either of the preceding claims, **characterised in that** the bolt (4) and the nut (10) have profiles that are designed to intermesh.

4. Combination according to any of the preceding claims, **characterised in that** the first opening (O₁), on its inner surface, has a profile that extends in the circumferential direction and is interrupted in the circumferential direction, the opening contour of the second opening (O₂) being non-circular.

5. Combination according to any of the preceding claims, **characterised in that** the second part (12) is rotatable relative to the first part (11) about the axis of rotation (A) within a limited angle.

6. Combination according to any of the preceding claims, **characterised in that** a resistance has to be overcome in order to leave the rotational position and/or **in that** the parts (11, 12) are preloaded in the unrotated position (release position) thereof.

7. Combination according to any of the preceding claims, **characterised in that** the extension of the second part (12) in the direction of the axis of rotation (A) is shorter than the extension of the first part (11).

8. Combination according to any of claims 2 to 7, **characterised in that** the profile is in the form of one or more threads, preferably in the form of a left-hand thread.

9. Combination according to any of the preceding claims, **characterised in that** the rotational position is locked.

10. Combination according to claim 9, **characterised in that** a release part (25) that can be moved relative to the first and/or second part (11, 12) is provided for releasing the rotational position.

11. Combination according to claim 10, **characterised in that** the release part (25) is actuated transversely to the direction in which the axis of rotation (A) extends or by rotation about the axis of rotation (A).

12. Combination according to any of claims 3 to 11, **characterised in that** the profile has, according to the interruption in the circumferential direction, a start region and an end region for each of a preferred plurality of superimposed individual profiles.

13. Combination according to claim 12, **characterised in that** the start and/or end regions are rounded or flat.

14. Combination according to claim 12, **characterised in that** the profiles consist of threads or thread portions.

15. Combination according to any of the preceding claims, **characterised in that** the bolt part has a rectangular cross section, two opposing flat sides being free of profiles or threads while two further opposing sides are rounded and have a thread or a profile.

## Revendications

1. Combinaison d'un boulon (4) ayant une section transversale, avec un écrou (10), dans laquelle l'écrou (10) comprend une première partie (11) avec une première ouverture (O₁) et un profilage intérieur, et une deuxième partie (12) avec une deuxième ouverture (0₂), dans laquelle les parties (11, 12) sont liées l'une à l'autre en rotation autour d'un axe de rotation (A) de l'écrou (10) entre une position de libération et une position rotative et les ouvertures (01, 02) se recouvrent et dans laquelle, en outre, sur la longueur du boulon (4), la section transversale du boulon (4) présente au moins partiellement un contour qui correspond au contour d'ouverture de la deuxième ouverture (02) de manière que le boulon (4) puisse être inséré dans la deuxième ouverture (0₂) mais sans pouvoir y tourner, **caractérisé en ce que** dans la position de libération, le contour d'ouverture commun, c'est-à-dire le contour d'ouverture total résultant d'une superposition des première et deuxième parties (11, 12), qui est suscitée par le contour d'ouverture de la deuxième partie (12), est plus petit qu'un contour circonférentiel du boulon (4), dans laquelle le boulon (4), à son extrémité libre par laquelle y est monté l'écrou (10), présente d'abord un contour plus petit sur lequel l'ouverture de la première partie (11) peut être facilement repoussée, mais lequel contour plus petit du boulon (4) est insérable dans le contour d'ouverture de la deuxième partie (12), dans laquelle la deuxième partie (12) ne peut être poussée au-delà du contour plus petit du boulon (4) .

2. Combinaison selon la revendication 1, **caractérisée en ce que** le boulon (4) présente d'abord, dans une direction de montage de l'écrou (10), une section d'insertion exempte de profilage, dans laquelle l'extension axiale de la section d'insertion est adaptée au moins à l'extension axiale de l'ouverture de la deuxième partie (12).

3. Combinaison selon l'une des revendications précédentes, **caractérisée en ce que** le boulon (4) et l'écrou (10) présentent des profilages conçus pour s'engager l'un dans l'autre.

4. Combinaison selon l'une des revendications précédentes, **caractérisée en ce que** la première ouverture (01) présente sur sa surface intérieure un profilage qui s'étend dans la direction circonférentielle et qui est interrompu dans la direction circonférentielle, dans laquelle le contour d'ouverture de la deuxième ouverture (02) est non circulaire.

5. Combinaison selon l'une des revendications précédentes, **caractérisée en ce que** la deuxième partie (12) peut tourner angulairement de manière limitée autour de l'axe de rotation (A) par rapport à la première partie (11).

6. Combinaison selon l'une des revendications précédentes, **caractérisée en ce qu'**une résistance doit être surmontée pour quitter la position rotative et/ou **en ce que** les pièces (11, 12) sont précontraintes dans leur position non rotative (position de libération).

7. Combinaison selon l'une des revendications précédentes, **caractérisée en ce que** l'extension de la deuxième partie (12) dans la direction de l'axe de rotation (A) est plus courte que l'extension de la première partie (11).

8. Combinaison selon l'une quelconque des revendications 2 à 7, **caractérisée en ce que** le profilage se présente sous la forme d'un ou plusieurs tours de filet, de préférence sous la forme d'un filet à gauche.

9. Combinaison selon l'une des revendications précédentes, **caractérisée en ce que** la position rotative est verrouillée.

10. Combinaison selon la revendication 9, **caractérisée en ce qu'**il est prévu une pièce de déverrouillage (25) mobile par rapport à la première et/ou la deuxième pièce (11, 12) pour déverrouiller la position rotative.

11. Combinaison selon la revendication 10, **caractérisée en ce que** la pièce de déverrouillage (25) doit être actionnée transversalement à la direction d'extension de l'axe de rotation (A) ou par rotation autour de l'axe de rotation (A).

12. Combinaison selon l'une des revendications 3 à 11, **caractérisée en ce que** le profilage présente une zone initiale et une zone d'extrémité pour chacune d'une pluralité préférée de profilages individuels agencés les uns au-dessus des autres en raison de l'interruption circonférentielle.

13. Combinaison selon la revendication 12, **caractérisée en ce que** les zones initiales et/ou terminales sont arrondies ou aplaties.

14. Combinaison selon la revendication 12, **caractérisée en ce que** les profilés sont constitués de filets ou de sections de filets.

15. Combinaison selon l'une des revendications précédentes, **caractérisée en ce que** le boulon a une section transversale rectangulaire, dans laquelle deux côtés plats opposés sont formés respectivement sans profilage ou filetage, tandis que deux autres côtés opposés sont arrondis et formés avec filetage ou profilage.
